# EUROPÄISCHE PATENTANMELDUNG

(11) **EP 4 095 019 A1**
(43) Veröffentlichungstag der Anmeldung: **30.11.2022**
(21) Anmeldenummer: 21176283.6
(22) Anmeldetag: 27.05.2021
(51) Int. Cl.: B62D 21/20, B62D 27/02, B62D 29/00, B62D 53/06

(54) **LEICHTBAU CHASSIS FÜR EIN NUTZFAHRZEUG**

(71) Anmelder: Fahrzeugbau KEMPF GmbH, 56470 Bad Marienberg (DE)
(72) Erfinder: Kempf, Norbert, 56470 Bad Marienberg (DE)
(74) Vertreter: Hannke, Christian

(57) **Zusammenfassung**

Chassis für ein Nutzfahrzeug, insbesondere für seinen Sattelauflieger, wobei das Chassis mindestens zwei zumindest teilweise parallel zur Längsrichtung des Chassis verlaufende, Trägerprofile aufweist, welche in einer Breitenrichtung des Chassis voneinander beabstandet angeordnet sind, wobei das Chassis in der Längsrichtung einen ersten vorderen Bereich und einen zweiten hinteren Bereich aufweist.

Erfindungsgemäß besteht jedes Trägerprofil in dem vorderen Bereich in einem ersten Abschnitt aus einem ersten Material mit einer ersten Dichte und in dem zweiten Bereich in einem zweiten Abschnitt aus einem zweiten Material mit einer zweiten, geringeren Dichte.

## Beschreibung

Die Erfindung betrifft ein Chassis für ein Nutzfahrzeug, insbesondere für seinen Sattelauflieger, wobei das Chassis mindestens zwei zumindest teilweise parallel zur Längsrichtung des Chassis verlaufende, Trägerprofile aufweist, welche in einer Breitenrichtung des Chassis voneinander beabstandet angeordnet sind, wobei das Chassis in der Längsrichtung einen ersten vorderen Bereich und einen zweiten hinteren Bereich aufweist.

Chassis dieser Art werden vor allem als Sattelauflieger verwendet, welche in Verbund mit einer Sattelzugmaschine als Sattelzug bekannt sind. Aus dem Stand der Technik sind dabei diverse Modelle bekannt, welche für den Transport verschiedener Güter angepasst sind. Vor allem sind Sattelauflieger bekannt, welche Aufnahmen für ISO-Container, speziell angepasste Behälter und Ladeflächen für Stückgut, Schüttgut und Flüssigkeitstransporte aufweisen. Während auf privaten Geländen beliebige Fahrzeuge eingesetzt werden können, so gelten für Sattelzüge, welche im öffentlichen Straßenverkehr teilnehmen, in vielen Ländern Einschränkungen durch Normen und Vorschriften die eingehalten werden müssen. Entsprechende Normen und Vorschriften beschränken zumeist vor allem die maximale Größe und das maximale Gewicht von Sattelzügen, weshalb es von besonderem Interesse ist einen Sattelzug und damit die Zugmaschine und den Sattelauflieger so kompakt und leicht wie möglich zu gestalten.

Die Beschränkungen für Sattelzüge betreffen vor allem die maximalen Ausmaße des Sattelzuges in der Höhe, Breite und Länge, sowie das maximal zulässige Gesamtgewicht. Da nicht nur die Größe und das Gewicht beschränkt sind, sondern auch etwaige Vorschriften bezüglich der Stabilität von Sattelaufliegern und Zugmaschinen eingehalten werden müssen, können Hersteller nicht pauschal auf Leichtbau setzten und die Stabilität vernachlässigen. Da vor allem beim Transport von Schüttgut jedoch besonders die Begrenzung des maximalen Gesamtgewichts des Sattelzugs eine Rolle spielt, wäre es vorteilhaft das Eigengewicht des Sattelzugs zu verringern um mehr Schüttgut in einer Ladung transportieren zu können.

Es ist daher die Aufgabe der vorliegenden Erfindung ein Leichtbau-Chassis bereitzustellen, welches die Anforderungen der Stabilität für die Verwendung auf öffentlichen Straßen erfüllt und im Vergleich zu herkömmlichen Chassis keine Einschränkungen im Frachtraum aufweist.

Diese Aufgabe wird gelöst durch ein Chassis für ein Nutzfahrzeug gemäß dem Anspruch 1. Die abhängigen Ansprüche beziehen sich auf vorteilhafte Ausführungsformen.

Erfindungsgemäß besteht jedes Trägerprofil in dem vorderen Bereich in einem ersten Abschnitt aus einem ersten Material mit einer ersten Dichte und in dem zweiten Bereich in einem zweiten Abschnitt aus einem zweiten Material mit einer zweiten, geringeren Dichte.

Da der vordere Bereich des Chassis bei Fahrt zumindest teilweise auf der Zugmaschine aufliegt und der Bereich, welcher in der Höhenrichtung über dieser Koppelstelle von Zugfahrzeug und Sattelauflieger liegt, vorzugsweise als Stauraum für Transportgut verwendet wird, sind die Trägerprofile im ersten Abschnitt vorzugsweise so kompakt wie möglich ausgelegt. Vorzugsweise sind die Trägerprofile im vorderen Bereich vor allem in ihrer Größe in der Höhenrichtung so klein wie möglich ausgelegt um möglichst viel Stauraum über der Koppelstelle zu erlangen.

Im hinteren Bereich des Fahrzeugs spielt die Größe der Trägerprofile vorzugsweise keine Rolle, da dort der Bauraum unterhalb des Chassis nicht durch das Zugfahrzeug oder eine Koppelstelle begrenzt ist. Es ist denkbar, dass deshalb die Trägerprofile im hinteren Bereich des Chassis zumindest teilweise ein Leichtmetall aufweisen. Da der Bauraum im hinteren Bereich vorzugsweise nicht eingeschränkt ist, können die Träger mit dem Leichtmetall größer ausgeformt sein, als die Träger im vorderen Bereich. Vor allem können die Träger größer in der Höhenrichtung ausgeformt sein.

Vorzugsweise ist das Material im vorderen Bereich stabiler als das Material im hinteren Bereich, wodurch die Trägerprofile im vorderen Bereich kleiner ausgelegt werden können, um Platz, vor allem in der Höhenrichtung, einzusparen.

Die Trägerprofile im vorderen Bereich und die Trägerprofile im hinteren Bereich sind vorzugsweise jeweils zwei physikalisch voneinander getrennte Träger. Vorzugsweise besteht das Chassis demnach aus vier einzelnen Trägern, welche miteinander verbunden werden.

Gemäß zumindest einer weiteren Ausführungsform ist das erste Material vorzugsweise eine Stahllegierung, wobei das zweite Material vorzugsweise eine Aluminiumlegierung ist.

Es ist denkbar, dass die Stahllegierung eine solche ist, wie sie für den Bau von herkömmlichen Chassis für Nutzfahrzeuge verwendet wird. Es ist auch denkbar, dass die Stahllegierung eine hochfeste Legierung ist um die Stabilität bei kleinen Profilquerschnitten der Träger zu erhöhen.

Vorzugsweise ist die Aluminiumlegierung eine Legierung mit Magnesium und/oder Silicium. Bevorzugt werden dabei die Legierungen AlMgSi 0,7 oder AlMgSi 1 für den hinteren Abschnitt der Trägerprofile verwendet.

Gemäß zumindest einer weiteren Ausführungsform weist das Chassis weiterhin mindestens einen Querträger auf, welcher mit seiner Längsrichtung zumindest teilweise in der Breitenrichtung zwischen den Trägerprofilen angeordnet ist und diese miteinander verbindet, wobei die Querträger vorzugsweise aus dem ersten und/oder zweiten Material bestehen.

Gemäß zumindest einer weiteren Ausführungsform bestehen die Querträger zwischen den Trägerprofilen im ersten Abschnitt aus dem ersten Material, wobei die Querträger zwischen den Trägerprofilen im zweiten Abschnitt aus dem zweiten Material bestehen.

Es ist denkbar, dass die Querträger neben dem ersten und zweiten Material auch aus anderen Materialien bestehen können. Weiterhin ist es denkbar, dass alle Querträger das gleiche Material aufweisen.

Vorzugsweise bestehen Querträger jeweils aus dem gleichen Material, wie die Trägerprofile, die sie miteinander verbinden. Vorzugsweise bestehen Querträger im vorderen Abschnitt demnach aus dem ersten Material, wohingegen Querträger im hinteren Abschnitt vorzugsweise aus dem zweiten Material bestehen.

Bevorzugt sind die Trägerprofile im vorderen Abschnitt mit einem Querträger verbunden. Vorzugsweise sind die Trägerprofile im hinteren Abschnitt mit mindestens zwei Querträgern verbunden.

Vorzugsweise sind, insbesondere wenn die Querträger aus dem gleichen Material bestehen wie die Trägerprofile die sie verbinden, die Querträger mit den Trägerprofilen verschweißt.

Es ist jedoch denkbar, dass die Trägerprofile mit den Querträgern verschraubt, vernietet oder ähnlich miteinander verbunden sind.

Vorzugsweise sind die Querträger orthogonal zu den Trägerprofilen angeordnet. Eine Anordnung über Kreuz ist jedoch auch denkbar.

Gemäß zumindest einer weiteren Ausführungsform sind die Trägerprofile aus dem ersten Abschnitt mit den Trägerprofilen aus dem zweiten Abschnitt an einer Verbindungsstelle über mindestens ein Verbindungselement formfest miteinander verbunden.

Es ist denkbar, dass es somit einen vorderen und einen hinteren Abschnitt des Chassis gibt, wobei diese Abschnitte vorzugsweise unabhängig voneinander gebaut werden und anschließend über die Verbindungsstelle miteinander verbunden werden.

Insbesondere ist es denkbar, dass dadurch beliebige vordere Abschnitte mit beliebigen hinteren Abschnitten verbindbar sind und demnach die einzelnen Abschnitte austauschbar sind. Es ist denkbar, dass dies besonders bei Unfällen oder Beschädigungen eines Abschnitts vorteilhaft ist, da nicht das ganze Chassis ersetzt werden muss.

Bevorzugt haben die unterschiedlichen Materialien an der Verbindungsstelle keinen elektrischen Kontakt miteinander, um die Bildung eines galvanischen Elementes zu vermeiden und dadurch Korrosion an der Verbindungsstelle vorzubeugen.

Bevorzugt werden ein vorderer Abschnitt und ein hinterer Abschnitt an der Verbindungsstelle über Verbindungselemente miteinander verbunden. Es ist denkbar, dass diese Verbindungselemente Schrauben, Nieten, Bolzen und/oder ähnliche Mittel zur Befestigung sein können.

Vorzugsweise bestehen die Befestigungselemente aus Stahl, um eine hohe Stabilität zu gewährleisten. Es ist denkbar, dass die Befestigungselemente auch aus Aluminium, Keramik, einer Legierung und/oder aus anderen Materialien bestehen.

Sofern die Verbindungselemente an einem Träger befestigt werden, welcher aus einem anderen Material besteht, weisen die Verbindungselemente vorzugsweise keinen elektrischen Kontakt zu dem Träger auf. Vorzugsweise sind alle Bauteile, zumindest aber alle unterschiedlichen Materialien, an der Verbindungsstelle elektrisch voneinander isoliert.

Vorzugsweise ist das gesamte Chassis so aufgebaut, dass sämtliche unterschiedlichen Materialien voneinander isoliert sind.

Gemäß zumindest einer weiteren Ausführungsform sind die Trägerprofile an der Verbindungsstelle endseitig und zumindest teilweise überlappend miteinander verschraubt.

Vorzugsweise sind die Trägerprofile des vorderen und hinteren Abschnitts so geformt, dass sie zumindest teilweise ineinander schiebbar sind. Vorzugsweise wird neben der einfachen Schraubverbindung der Träger zumindest an den Stegblechen ein zusätzliches Verstärkungsblech verschraubt um eine Zweischneidigkeit der Schrauben an der Verbindungsstelle zu gewährleisten und damit die Stabilität der Verbindungsstelle zu erhöhen.

Gemäß zumindest einer weiteren Ausführungsform sind das erste Material und das zweite Material an der Verbindungsstelle voneinander elektrisch isoliert sind. Vorzugsweise wird dadurch elektrochemische Korrosion an den Bauteilen vorgebeugt.

Vorzugsweise wird für eine entsprechende Isolierung der Materialien zumindest ein isolierendes Material verwendet. Es ist denkbar, dass ein entsprechendes isolierendes Material, eine Beschichtung, Lack, eine zwischengelegte Matte und/oder ähnliches sein können.

Vorzugsweise sind zumindest Teile der Oberflächen vom Chassis mit einem zusätzlichen Korrosionsschutz versehen.

Gemäß zumindest einer weiteren Ausführungsform ist der Profilquerschnitt der Trägerprofile im ersten Abschnitt kleiner, als der Profilquerschnitt der Trägerprofile im zweiten Abschnitt.

Es ist denkbar, dass das die Trägerprofile im vorderen Abschnitt kleiner sind als die Trägerprofile im hintern Abschnitt, da die maximale Bauhöhe in der Höhenrichtung im vorderen Abschnitt begrenzt ist.

Vorzugsweise ist die Baugröße der Trägerprofile im hinteren Abschnitt nicht begrenzt, weshalb die Profile dort größer sind, zumindest in der Höhenrichtung, und vorzugsweise auch aus einem leichteren Material bestehen, um das Gewicht des Chassis zu minimieren.

Es ist denkbar, dass durch die unterschiedlichen Materialeigenschaften und Baugrößen der Träger im vorderen und hinteren Abschnitt, die Träger der beiden Abschnitte dennoch ähnliche Stabilitäten aufweisen.

Gemäß zumindest einer weiteren Ausführungsform weisen die Trägerprofile im ersten Abschnitt an dem Ende, mit dem sie mit den Trägerprofilen im zweiten Abschnitt verbunden sind, einen Übergangsbereich des Profilquerschnitts auf, sodass sie an der Verbindungsstelle den gleichen Profilquerschnitt aufweisen wie die Trägerprofile im zweiten Abschnitt.

Vorzugsweise weisen die Trägerprofile mit dem dichteren Material die konische Ausformung auf, damit in dem Abschnitt mit dem leichteren Material (und damit gleichzeitig instabileren Material) keine Schwachstelle entsteht.

Gemäß zumindest einer weiteren Ausführungsform weisen die Trägerprofile im ersten Abschnitt im Übergangsbereich zumindest teilweise eine konische Verjüngung auf.

Vorzugsweise weisen die Trägerprofile im ersten Abschnitt zusätzlich eine Versetzung der Trägerhöhe in der Höhenrichtung auf, sodass die Trägerprofile im ersten Abschnitt weiter in der Höhenrichtung des Chassis hervorragen, als die Trägerprofile im zweiten Abschnitt. Vorzugsweise wird dadurch der Masseschwerpunkt des Sattelaufliegers in Richtung der Fahrbahn verlagert.

Es ist denkbar, dass ein entsprechender Versatz der Trägerhöhe in dem Übergangsbereich mit der konischen Verjüngung angeordnet ist.
Gemäß zumindest einer weiteren Ausführungsform weisen, entgegen einer vorwärts Fahrtrichtung betrachtet, die Trägerprofile im ersten Abschnitt vor der Verbindungsstelle das erste Material auf, wobei hinter der Verbindungsstelle die Trägerprofile des zweiten Abschnitts mit dem zweiten Material angeordnet sind.

Es ist denkbar, dass an dem Chassis weiterhin mindestens ein Standfuß angebracht ist, welcher beim Abstellen des Sattelaufliegers ohne Zugmaschine ein Kippen des vorderen Abschnitts des Chassis in Richtung Fahrbahn vermeidet.

Vorzugsweise sind an zumindest zwei der Trägerprofile Stützen angebracht.

Vorzugsweise sind die Stützen an den Trägerprofilen des vorderen und/oder hinteren Abschnitts angebracht. Es ist denkbar, dass die Stützen auch an der Verbindungsstelle angebracht sind und vorzugsweise mit den Verbindungselementen befestigt sind.

Vorzugsweise bestehen auch die Stützen zumindest teilweise aus einem der Materialien.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein Chassis aus der Seitenansicht
- Fig. 2: ein Chassis aus der Draufsicht
- Fig. 3a-d: eine Schnittansicht von Trägerprofilen
- Fig. 4: ein Chassis mit Stützen aus der Seitenansicht

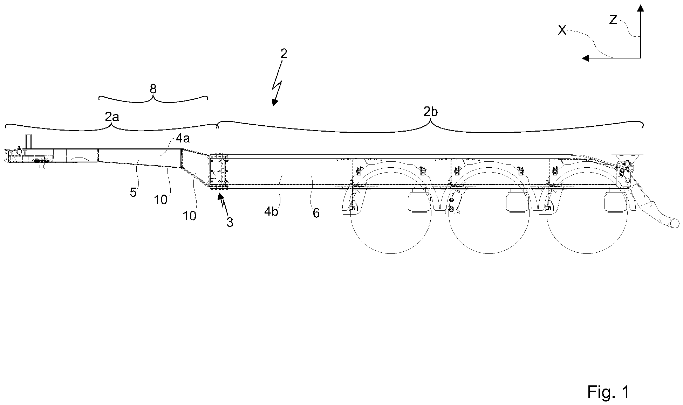

Figur 1 zeigt ein Chassis 2 für ein Nutzfahrzeug aus der Seitenansicht. Das Chassis 2 erstreckt sich demnach vorzugsweise in der Längsrichtung X und der Höhenrichtung Z. Zu sehen sind der erste, vordere Bereich des Chassis 2a, sowie der zweite, hintere Bereich 2b, welche über die Verbindungsstelle 3 miteinander verbunden sind. In dem vorderen Bereich 2a sind dabei vorzugsweise die Trägerprofile des ersten Abschnitts 4a angeordnet. Bevorzugt weisen diese den Übergangsbereich 8 auf, welcher eine konische Verjüngung 10 aufweist. Vorzugsweise sind die Trägerprofile 4a so ausgeformt, dass sie zumindest in einem Bereich höher in der Höhenrichtung Z ausgebildet sind, als in einem anderen Bereich. Vorzugsweise sind die Trägerprofile im vorderen Bereich 2a an der Stelle höher ausgebildet, wo die Koppelstelle mit der Sattelzugmaschine 19 ist. Es ist denkbar, dass die Trägerprofile 4a an dieser Koppelstelle 19 auch die geringste Bauhöhe in der Höhenrichtung Z aufweisen um möglichst viel Platz für Frachtraum oberhalb dieses Bereichs zu erhalten.

Die Trägerprofile 4a im ersten Bereich 2a sind vorzugsweise aus dem ersten Material 5 gefertigt. Vorzugsweise sind auch alle weiteren Bauteile, welche in dem vorderen Bereich 2a verbaut sind aus dem ersten Material 5 gefertigt.

Die Trägerprofile des ersten Abschnitts 4a im vorderen Bereich 2a sind an der Verbindungsstelle 3 mit den Trägerprofilen des zweiten Abschnitts 4b im hinteren Bereich 2b verbunden. Es ist zu sehen, dass die Oberkante der Trägerprofile im zweiten Abschnitt 4b in der Höhenrichtung Z niedriger angeordnet ist, als die Oberkante der Trägerprofile im ersten Abschnitt 4a. Weiterhin ist zu sehen, dass die Trägerprofile im zweiten Abschnitt 4b in ihrer Baugröße zumindest in der Höhenrichtung Z größer ausgeformt sind, als die Trägerprofile im ersten Abschnitt 4a.

Die Trägerprofile im zweiten Abschnitt 4b sind vorzugsweise aus dem zweiten Material 6 gefertigt. Es ist denkbar, dass auch alle weiteren Bauteile, welche an diesen Trägern 4b befestigt werden, aus dem zweiten Material 6 bestehen.

In dem hinteren Bereich des Chassis 2a sind weiterhin die Reifen des Chassis, sowie ein Unterfahrschutz zu erkennen.

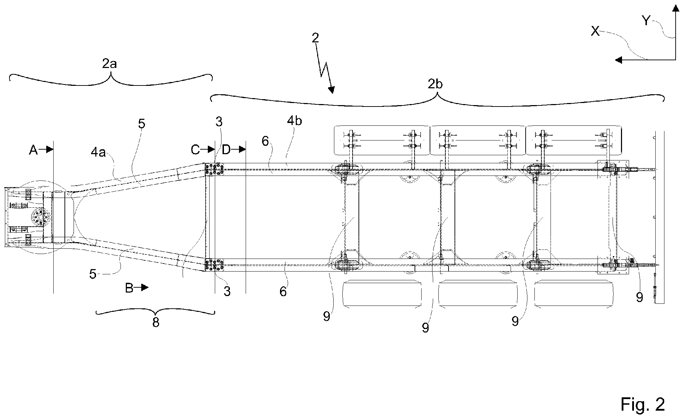

Figur 2 zeigt ein Chassis 2 aus der Draufsicht. Dabei erstreckt sich das Chassis 2 vorzugsweise in der Längsrichtung X und der Breitenrichtung Y.

Aus der Draufsicht sind wiederum der vordere Bereich 2a und der hintere Bereich 2b des Chassis zu erkennen. Die Verbindungsstelle 3, an welcher die Trägerprofile des ersten Abschnitts 4a mit den Trägerprofilen des zweiten Abschnitts 4b verbunden sind, ist dabei ebenfalls zu erkennen.

In dem vorderen Bereich 2a ist zu erkennen, dass die Trägerprofile des ersten Abschnitts 4a nicht nur in der Höhenrichtung Z eine konische Ausformung aufweisen (hier nicht erkennbar), sondern diese vorzugsweise auch in der Breitenrichtung entlang der Längsrichtung X zusammenlaufen. Dabei ist die größte Distanz zwischen den Trägerprofilen 4a in der Querrichtung Y vorzugsweise an der Verbindungsstelle 3. Vorzugsweise verlaufen die Trägerprofile 4a von der Verbindungsstelle 3 in Längsrichtung X zur Koppelstelle mit der Zugmaschine 19, konisch aufeinander zu, sodass sie an der Koppelstelle 19 den geringsten Abstand in der Breitenrichtung Y zueinander haben.

Vorzugsweise ist zumindest ein Querträger im vorderen Bereich des Chassis 2a zischen den Trägerprofilen 4a angeordnet. Vorzugsweise liegt der Querträger 9 im Bereich in Längsrichtung X kurz vor der Verbindungsstelle 3. Die Trägerprofile 4a sind vorzugsweise ebenfalls im Bereich der Koppelstelle 19 miteinander verbunden.

An der Verbindungsstelle 3 sind die Trägerprofile 4a des vorderen Bereichs 2a mit den Trägerprofilen 4b des zweiten Bereichs 2b verbunden. Vorzugsweise verlaufen die Trägerprofile 4b im zweiten Bereich 2b parallel zueinander.

Die Trägerprofile 4b sind vorzugsweise durch mindestens zwei Querträger 9 miteinander verbunden. Vorzugsweise befinden sich die Querträger vor allem in dem Bereich, in welchem die Räder an dem hinteren Bereich 2b des Chassis 2 befestigt sind.

Bevorzugt bestehen die Querträger zwischen den Trägerprofilen im ersten Abschnitt 4a aus dem ersten Material 5 und die Querträger 9 zwischen den Trägerprofilen im zweiten Abschnitt 4b aus dem zweiten Material 6.

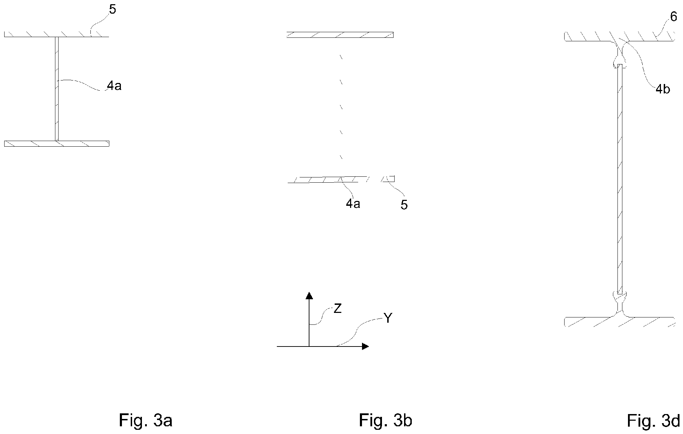

In Figur 2 sind in der Längsrichtung X vier Schnittlinien A bis D eingezeichnet. Diese Schnittlinien beziehen sich auf die Figuren 3a bis 3d, wobei die Figuren 3a bis 3d Querschnitte der Trägerprofile darstellen und die Schnittstellen A bis D jeweils angeben an welcher Stelle der Trägerprofile 4a und 4b die abgebildeten Querschnitte gelegen sind.

Die Figuren 3a bis 3d stellen Querschnitte der Trägerprofile 4a und 4b an verschiedenen Stellen entlang der Längsrichtung X dar.

Figur 3a stellt dabei den kleinsten Querschnitt der Trägerprofile 4a dar, welcher im vorderen Bereich 2a vorhanden ist, in welchem die Koppelstelle 19 gelegen ist.

Figur 3b stellt dabei den Querschnitt der Trägerprofile 4a im Übergangsbereich 8 dar, wobei der Querschnitt in Längsrichtung X zur Verbindungsstelle 3 weiter zunimmt.

Die Trägerprofile in Figur 3a und 3b bestehen demnach vorzugsweise aus dem ersten Material 5.

Die Figur 3d stellt den Querschnitt der Trägerprofile 4b im hinteren Bereich 2b des Chassis 2 dar, wobei dieser Querschnitt vorzugsweise entlang der Längsrichtung X im hinteren Bereich 2b gleich bleibt. Der dargestellte Querschnitt zeigt vorzugsweise die Trägerprofile, welche aus dem zweiten Material 6 bestehen.

Die Figuren 3a, 3b und 3d stellen demnach Querschnitte entweder der Trägerprofile aus dem vorderen Bereich 2a oder aus dem hinteren Bereich 2b dar.

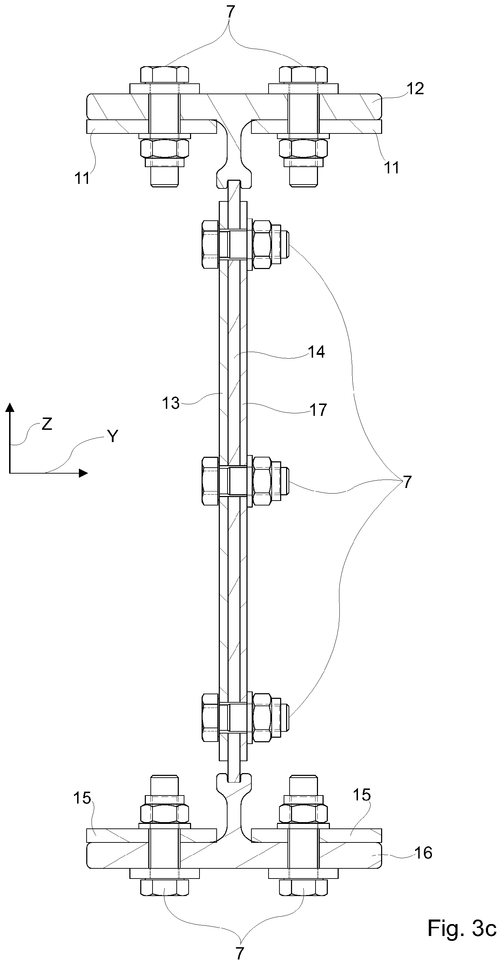

Figur 3c stellt einen Querschnitt der Verbindungsstelle 3 dar, wobei an der Verbindungsstelle 3 die Trägerprofile des ersten und zweiten Abschnitts 4a und 4b zu sehen sind.

Die Verbindungsstelle 3 ist vorzugsweise so aufgebaut, dass die Trägerprofile des zweiten Abschnitts 4b keine Aussparung aufweisen, wohingegen die Trägerprofile des ersten Abschnitts 4a zumindest teilweise so geformt sind, dass sie mit den Trägerprofilen des zweiten Abschnitts 4b ineinander schiebbar sind.

Vorzugsweise sind der Obergurt 11 und der Untergurt 15 des Trägerprofils des ersten Abschnitts 4a an der Stelle unterteilt, an welcher das Stegblech 14 vom Trägerprofil des zweiten Abschnitts 4b angeordnet ist. Vorzugsweise ist der Obergurt 11 vom Trägerprofil des ersten Abschnitts 4a in der Höhenrichtung Z unterhalb des Obergurtes 12 vom Trägerprofil des zweiten Abschnitts 4b angeordnet. Vorzugsweise ist der Untergurt 15 vom Trägerprofil des ersten Abschnitts 4a in der Höhenrichtung Z oberhalb des Untergurtes 16 vom Trägerprofil des zweiten Abschnitts 4b angeordnet.

Vorzugsweise ist das Stegblech vom Trägerprofil des ersten Abschnitts 13 in der Breitenrichtung Y seitlich zum Stegblech vom Trägerprofil des zweiten Abschnitts 14 angeordnet.

Die Obergurte, Untergurte und Stegbleche der Trägerprofile des ersten und zweiten Abschnitts 4a und 4b sind vorzugsweise mit den Verbindungselementen 7 miteinander verbunden. Dabei sind die Verbindungselemente 7, welche die Ober- und Untergurte miteinander verbinden, vorzugsweise entlang der Höhenrichtung Z durch diese geführt, während die Verbindungselemente 7, welche die Stegbleche miteinander verbinden, vorzugsweise entlang der Breitenrichtung Y durch diese hindurchgeführt sind.

Vorzugsweise ist, neben den Stegblechen der Trägerprofile des ersten und zweiten Abschnitts 13 und 14, ein zusätzliches Verstärkungsblech 17 angeordnet, welches ebenfalls mit den Verbindungselementen 7 mit den Stegblechen 13 und 14 verbunden wird und dadurch die Stabilität der Verbindungsstelle 3 erhöht.

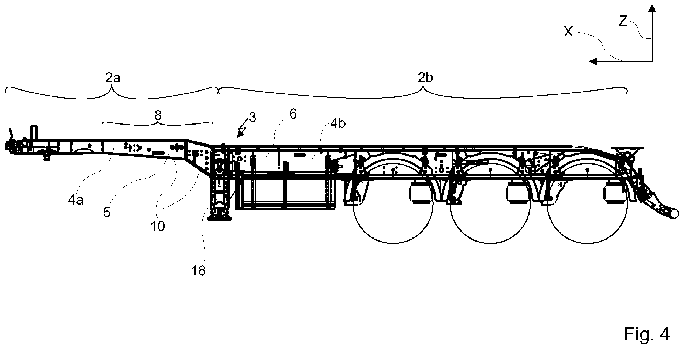

Figur 4 zeigt ein Chassis 2 aus der Seitenansicht, wonach sich das Chassis in der Längsrichtung X und Höhenrichtung Z erstreckt. Im Vergleich zu Figur 1 weist das Chassis 2 in Figur 4 Stützelemente 18 auf, welche beim Abstellen des Chassis 2 ohne Nutzfahrzeug 1 dafür sorgen, dass das Chassis 2 nicht mit der Koppelstelle 19 in Richtung Fahrbahn kippt.

Es ist denkbar, dass die Stützen 18 entweder im vorderen Bereich 2a, hinteren Bereich 2b und/oder an der Verbindungsstelle 3 angebracht werden können. Vorzugsweise weisen die Stützen 18 eine Vorrichtung auf, sodass sie mit den Verbindungselementen 7 an der Verbindungsstelle 3 befestigbar sind.

### Bezugszeichenliste

- 1: Nutzfahrzeug
- 2: Chassis
- 2a: erster, vorderer Bereich des Chassis
- 2b: zweiter, hinterer Bereich des Chassis
- 3: Verbindungsstelle
- 4: Trägerprofile
- 4a: Trägerprofil des ersten, vorderen Abschnitts
- 4b: Trägerprofil des zweiten, hinteren Abschnitts
- 5: erstes Material
- 6: zweites Material
- 7: Verbindungselement
- 8: Übergangsbereich Profilquerschnitt
- 9: Querträger
- 10: konische Ausformung
- 11: Obergurt vom Trägerprofil des ersten Abschnitts
- 12: Obergurt vom Trägerprofil des zweiten Abschnitts
- 13: Stegblech vom Trägerprofil des ersten Abschnitts
- 14: Stegblech vom Trägerprofil des zweiten Abschnitts
- 15: Untergurt vom Trägerprofil des ersten Abschnitts
- 16: Untergurt vom Trägerprofil des zweiten Abschnitts
- 17: Verstärkungsblech für Zweischneidigkeit der Schraubverbindung
- 18: Stützelement für Chassis
- 19: Koppelstelle zwischen Sattelauflieger und Zugmaschine

- X: Längsrichtung des Nutzfahrzeugs
- Y: Breitenrichtung
- Z: Höhenrichtung

## Patentansprüche

1. Chassis (2) für ein Nutzfahrzeug (1), insbesondere für seinen Sattelauflieger, wobei das Chassis (2) mindestens zwei zumindest teilweise parallel zur Längsrichtung (X) des Chassis (2) verlaufende, Trägerprofile (4) aufweist, welche in einer Breitenrichtung (Y) des Chassis (2) voneinander beabstandet angeordnet sind, wobei das Chassis (2) in der Längsrichtung (X) einen ersten vorderen Bereich (2a) und einen zweiten hinteren Bereich (2b) aufweist,
**dadurch gekennzeichnet, dass**
jedes Trägerprofil (4) in dem vorderen Bereich (2a) in einem ersten Abschnitt (4a) aus einem ersten Material (5) mit einer ersten Dichte und in dem zweiten Bereich (2b) in einem zweiten Abschnitt (4b) aus einem zweiten Material (6) mit einer zweiten, geringeren Dichte besteht.

2. Chassis (2) nach Anspruch 1,
**dadurch gekennzeichnet, dass**
das erste Material (5) vorzugsweise eine Stahllegierung ist, wobei das zweite Material (6) vorzugsweise eine Aluminiumlegierung ist.

3. Chassis (2) nach mindestens einem der vorangegangenen Ansprüche,
**dadurch gekennzeichnet, dass**
das Chassis (2) weiterhin mindestens einen Querträger (9) aufweist, welcher zumindest teilweise in der Breitenrichtung (Y) zwischen den Trägerprofilen (4) angeordnet ist und diese miteinander verbindet, wobei die Querträger (9) aus dem ersten und/oder zweiten Material (5, 6) bestehen.

4. Chassis (2) nach Anspruch 3,
**dadurch gekennzeichnet, dass**
die Querträger (9) zwischen den Trägerprofilen im ersten Abschnitt (4a) aus dem ersten Material (5) bestehen, wobei die Querträger zwischen den Trägerprofilen im zweiten Abschnitt (4b) aus dem zweiten Material (6) bestehen.

5. Chassis (2) nach mindestens einem der vorangegangenen Ansprüche,
**dadurch gekennzeichnet, dass**
die Trägerprofile aus dem ersten Abschnitt (4a) mit den Trägerprofilen aus dem zweiten Abschnitt (4b) an einer Verbindungsstelle (3) über mindestens ein Verbindungselement (7) formfest miteinander verbunden sind.

6. Chassis (2) nach Anspruch 5,
**dadurch gekennzeichnet, dass**
die Trägerprofile (4a, 4b) an der Verbindungsstelle (3) endseitig und zumindest teilweise überlappend miteinander verschraubt sind.

7. Chassis (2) nach mindestens einem der vorangegangenen Ansprüche,
**dadurch gekennzeichnet, dass**
das erste Material (5) und das zweite Material (6) an der Verbindungsstelle (3) voneinander elektrisch isoliert sind.

8. Chassis (2) nach mindestens einem der vorangegangenen Ansprüche,
**dadurch gekennzeichnet, dass**
der Profilquerschnitt der Trägerprofile im ersten Abschnitt (4a) kleiner ist, als der Profilquerschnitt der Trägerprofile im zweiten Abschnitt (4b).

9. Chassis (2) nach Anspruch 8,
**dadurch gekennzeichnet, dass**
die Trägerprofile im ersten Abschnitt (4a) an dem Ende, mit dem sie mit den Trägerprofilen im zweiten Abschnitt (4b) verbunden sind, einen Übergangsbereich (8) des Profilquerschnitts aufweisen, sodass sie an der Verbindungsstelle (3) den gleichen Profilquerschnitt aufweisen wie die Trägerprofile im zweiten Abschnitt (4b).

10. Chassis (2) nach Anspruch 9,
**dadurch gekennzeichnet, dass**
die Trägerprofile im ersten Abschnitt (4a) im Übergangsbereich (8) zumindest teilweise eine konische Verjüngung aufweisen.

11. Chassis (2) nach dem vorherigen Anspruch,
**dadurch gekennzeichnet, dass**
entgegen einer vorwärts Fahrtrichtung betrachtet die Trägerprofile im ersten Abschnitt (4a) vor der Verbindungsstelle (3) das erste Material (5) aufweisen und nach der Verbindungsstelle (3) die Trägerprofile des zweiten Abschnitts (4b) mit dem zweiten Material (6) angeordnet sind.

## Geänderte Patentansprüche

### Geänderte Patentansprüche gemäss Regel 137(2) EPÜ.

1. Chassis (2) eines Sattelaufliegers, wobei das Chassis (2) mindestens zwei zumindest teilweise parallel zur Längsrichtung (X) des Chassis (2) verlaufende, Trägerprofile (4) aufweist, welche in einer Breitenrichtung (Y) des Chassis (2) voneinander beabstandet angeordnet sind, wobei das Chassis (2) in der Längsrichtung (X) einen ersten vorderen Bereich (2a) und einen zweiten hinteren Bereich (2b) aufweist,
**dadurch gekennzeichnet, dass**
jedes Trägerprofil (4) in dem vorderen Bereich (2a) in einem ersten Abschnitt (4a) aus einem ersten Material (5) mit einer ersten Dichte und in dem zweiten Bereich (2b) in einem zweiten Abschnitt (4b) aus einem zweiten Material (6) mit einer zweiten, geringeren Dichte besteht.

2. Chassis (2) nach Anspruch 1,
**dadurch gekennzeichnet, dass**
das erste Material (5) vorzugsweise eine Stahllegierung ist, wobei das zweite Material (6) vorzugsweise eine Aluminiumlegierung ist.

3. Chassis (2) nach mindestens einem der vorangegangenen Ansprüche,
**dadurch gekennzeichnet, dass**
das Chassis (2) weiterhin mindestens einen Querträger (9) aufweist, welcher zumindest teilweise in der Breitenrichtung (Y) zwischen den Trägerprofilen (4) angeordnet ist und diese miteinander verbindet, wobei die Querträger (9) aus dem ersten und/oder zweiten Material (5, 6) bestehen.

4. Chassis (2) nach Anspruch 3,
**dadurch gekennzeichnet, dass**
die Querträger (9) zwischen den Trägerprofilen im ersten Abschnitt (4a) aus dem ersten Material (5) bestehen, wobei die Querträger zwischen den Trägerprofilen im zweiten Abschnitt (4b) aus dem zweiten Material (6) bestehen.

5. Chassis (2) nach mindestens einem der vorangegangenen Ansprüche,
**dadurch gekennzeichnet, dass**
die Trägerprofile aus dem ersten Abschnitt (4a) mit den Trägerprofilen aus dem zweiten Abschnitt (4b) an einer Verbindungsstelle (3) über mindestens ein Verbindungselement (7) formfest miteinander verbunden sind.

6. Chassis (2) nach Anspruch 5,
**dadurch gekennzeichnet, dass**
die Trägerprofile (4a, 4b) an der Verbindungsstelle (3) endseitig und zumindest teilweise überlappend miteinander verschraubt sind.

7. Chassis (2) nach mindestens einem der vorangegangenen Ansprüche,
**dadurch gekennzeichnet, dass**
das erste Material (5) und das zweite Material (6) an der Verbindungsstelle (3) voneinander elektrisch isoliert sind.

8. Chassis (2) nach mindestens einem der vorangegangenen Ansprüche,
**dadurch gekennzeichnet, dass**
der Profilquerschnitt der Trägerprofile im ersten Abschnitt (4a) kleiner ist, als der Profilquerschnitt der Trägerprofile im zweiten Abschnitt (4b).

9. Chassis (2) nach Anspruch 8,
**dadurch gekennzeichnet, dass**
die Trägerprofile im ersten Abschnitt (4a) an dem Ende, mit dem sie mit den Trägerprofilen im zweiten Abschnitt (4b) verbunden sind, einen Übergangsbereich (8) des Profilquerschnitts aufweisen, sodass sie an der Verbindungsstelle (3) den gleichen Profilquerschnitt aufweisen wie die Trägerprofile im zweiten Abschnitt (4b).

10. Chassis (2) nach Anspruch 9,
**dadurch gekennzeichnet, dass**
die Trägerprofile im ersten Abschnitt (4a) im Übergangsbereich (8) zumindest teilweise eine konische Verjüngung aufweisen.

11. Chassis (2) nach dem vorherigen Anspruch,
**dadurch gekennzeichnet, dass**
entgegen einer vorwärts Fahrtrichtung betrachtet die Trägerprofile im ersten Abschnitt (4a) vor der Verbindungsstelle (3) das erste Material (5) aufweisen und nach der Verbindungsstelle (3) die Trägerprofile des zweiten Abschnitts (4b) mit dem zweiten Material (6) angeordnet sind.
